(19) Europäisches Patentamt / European Patent Office / Office européen des brevets

(11) **EP 1 815 926 A2**

(12) # DEMANDE DE BREVET EUROPEEN

(43) Date de publication:
**08.08.2007 Bulletin 2007/32**

(51) Int Cl.:
**B23B 31/12** *(2006.01)*

(21) Numéro de dépôt: **07356010.4**

(22) Date de dépôt: **29.01.2007**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(30) Priorité: **02.02.2006 FR 0600958**

(71) Demandeur: **ETABLISSEMENTS AMYOT S.A.**
**F-25300 Pontarlier (FR)**

(72) Inventeur: **Cachod, Yves**
**25270 Levier (FR)**

(74) Mandataire: **Maureau, Philippe et al**
**Cabinet GERMAIN & MAUREAU,**
**BP 6153**
**69466 Lyon cedex 06 (FR)**

(54) **Mandrin porte-outil pour l'équipement d'une machine tournante**

(57) La pièce centrale du mandrin, d'axe (3), porte des mors (7) pouvant être déplacés entre une position de serrage de l'outil (5) et une position desserrée.

Chaque mors comporte un logement (20) ouvert vers l'axe (3), présentant un fond (23) et des faces latérales (24, 25).

Un galet (29) est monté contre le fond du logement, en étant mobile en rotation autour de son axe parallèle à l'axe (3), et en translation entre les deux faces latérales du logement.

Le fond du logement forme un V très aplati au centre duquel se positionne le galet lorsqu'un opérateur serre les mors sur l'outil. Puis, lors d'une rotation (R) à droite du mandrin, le galet roule sans glisser sur le mors et sur l'outil, jusqu'à être coincé en butée contre la face latérale droite (24) du logement. On obtient ainsi un excellent serrage de l'outil.

FIG. 10

**Description**

La présente invention concerne un mandrin porte-outil pour l'équipement d'une machine tournante.

Un mandrin monté sur l'arbre d'une machine tournante vise à réaliser la fixation d'un outil, tel qu'un foret s'il s'agit d'un outil de perçage. La fixation de l'outil sur le mandrin est couramment réalisée par l'intermédiaire de trois mors convergeant vers l'avant, entraînés et guidés par différents moyens ménagés dans le mandrin, de telle sorte que le déplacement axial des mors vers l'avant se traduit par un rapprochement de ceux-ci en vue de réaliser le serrage de l'outil, tandis que le déplacement vers l'arrière des mors s'accompagne d'un desserrage de l'outil. Un mandrin du type précité est en général équipé d'une pièce centrale qui présente d'une part une partie arrière destinée à être fixée à la machine tournante, et d'autre part une partie avant à laquelle sont associés les mors.

Certains mandrins plus élaborés sont équipés de plaquettes en carbure qui sont brasées sur les mors pour former la partie du mors en contact avec la queue de l'outil montée dans le mandrin. Le but de ces plaquettes carbure est essentiellement de fournir une excellente résistance des mors à l'usure, mais également de permettre aux mors de pénétrer dans la queue de l'outil afin d'augmenter la puissance de serrage du mandrin et ainsi éviter que l'outil puisse tourner dans le mandrin. L'inconvénient majeur de ces plaquettes carbure est qu'elles détériorent très rapidement la queue de l'outil.

Très souvent, les mandrins de perceuse de ce type possèdent de plus la particularité d'être des mandrins dit à serrage manuel, c'est à dire ne nécessitant pas de clé pour les serrer. Une des caractéristiques les plus importantes de ces mandrins est le couple de serrage qu'ils sont capables de développer. Pour des raisons évidentes de souplesse d'utilisation, ces mandrins doivent développer un couple de serrage sur l'outil le plus important possible alors que l'opérateur doit exercer sur le mandrin un effort de serrage le plus faible possible. En d'autres termes, le rendement du mandrin doit être le plus important possible pour satisfaire au mieux aux exigences du marché.

Par exemple, on connaît des mandrins du type comportant des mors coulissant dans des alésages ménagés dans la partie centrale formant corps et convergeant vers l'avant. Les mors sont filetés sur leur face extérieure et sont en prise avec la face intérieure filetée d'un écrou, lui-même coopérant avec la paroi intérieure d'une chemise montée pivotante sur le corps.

Dans ce cas, le mouvement de rotation de l'écrou (par l'intermédiaire de la chemise) conduit à un mouvement de translation des mors. Ainsi, ce système permet la transformation d'un couple de serrage Ca appliqué sur l'écrou en un effort normal Fn appliqué par l'arête du mors sur la queue de l'outil. Le rendement propre du système écrou/mors détermine l'effort normal maximal Fn, qui est fonction de Ca : $Fn = f(Ca)$.

Le coefficient de frottement u existant entre l'arête du mors et la queue de l'outil fixe la valeur maximale de l'effort tangentiel résultant Ft, d'où le couple maximal résultant Cr développé par le mandrin :

$$Cr = R \times Ft = R \times Fn \times u = R \times f(Ca) \times u$$

où R est le rayon de la queue de l'outil.

Le rendement du mandrin est donc très fortement lié au coefficient de frottement u existant entre l'arête du mors et la queue de l'outil, ainsi qu'au couple Ca appliqué par l'opérateur sur l'écrou.

Ainsi selon la nature de la queue d'outil (dureté, rugosité), le coefficient de frottement peut varier de façon très importante. Par conséquent, le couple de serrage développé par le mandrin reste très aléatoire.

Par ailleurs, le document WO 01/81046 décrit un système de serrage d'un arbre au moyen de galets en contact avec une paroi formant came. Toutefois, ce système ne permet pas de serrer des arbres de tous diamètres. En outre, le serrage obtenu n'est pas pleinement satisfaisant. En effet, les galets sont retenus contre les cames au moyen d'une cage unique élastique les liant les uns aux autres, ce qui rend les mouvements des galets dépendants et ne permet pas de résoudre convenablement les problèmes de centrage de l'arbre. De plus, le profil courbe et continu des cames ne garantit pas un positionnement précis des galets contre ces cames, ce qui nuit à la qualité du serrage.

La présente invention vise à remédier aux inconvénients mentionnés ci-dessus, en fournissant un mandrin qui soit capable de développer une forte puissance de serrage, sans pour autant détériorer la queue de l'outil, ni nécessiter un effort de serrage important de la part de l'opérateur.

Un autre objectif de l'invention est de garantir un très bon serrage malgré les contraintes de résistance et de faux rond inhérentes aux mandrins.

A cet effet, l'invention concerne un mandrin porte-outil pour l'équipement d'une machine tournante, comprenant :

- une pièce centrale présentant un axe et comportant une partie arrière destinée à être fixée sur un arbre moteur de la machine tournante et une partie avant à laquelle sont associés des mors présentant chacun un plan longitudinal médian ;
- des moyens de déplacement des mors entre une position de serrage de l'outil et une position desserrée ;
- un logement ménagé du côté intérieur de chaque mors, ledit logement comprenant une ouverture dirigée vers l'axe de la pièce centrale, un fond opposé à l'ouverture, ainsi qu'une première et une deuxième faces latérales sensiblement parallèles à l'axe de la pièce centrale ;
- au moins un galet monté dans chaque logement sensiblement contre le fond de celui-ci, au moyen d'un organe de retenue rigide et distinct de l'organe de retenue associé aux autres mors, le galet étant mobile en rotation autour de son axe qui est disposé sensiblement parallèlement à l'axe de la pièce centrale, et mobile en translation entre les deux faces latérales du logement dont l'écartement est supérieur au diamètre du galet, le galet étant apte à coopérer avec le mors et l'outil ;

le fond du logement présentant une première et une deuxième portions d'appui s'étendant depuis la première face latérale, respectivement la deuxième face latérale, jusqu'au plan longitudinal médian du mors, chaque portion d'appui étant courbée ou inclinée transversalement de sorte que la distance entre l'axe de la pièce centrale et ladite portion d'appui augmente lorsqu'on se rapproche du plan longitudinal médian, lesdites portions d'appui étant adjacentes et symétriques par rapport au plan longitudinal médian et formant dans leur zone de jonction une cavité de positionnement du galet, prévue pour que, lors de la mise en place de l'outil entre les mors, le galet se positionne au contact du fond du logement, sensiblement dans la cavité de positionnement.

En pratique, lors du serrage d'un outil dans le mandrin selon l'invention, on peut distinguer trois séquences principales :

- première phase : les galets étant libres dans leur logement, ils se situent dans une position quelconque entre les deux faces latérales du logement au contact de l'organe de retenue, ou au contact des portions d'appui ou même au contact de l'une des faces latérales. Lorsque l'outil à serrer entre en contact avec les galets, le degré de mobilité autorisé au galet par l'organe de retenue et la géométrie particulière des portions d'appui permettent au galet de se déplacer de façon naturelle et systématique au centre du logement. Ainsi les galets de chaque mors se retrouvent tous dans une position précise centrée sur le plan médian des mors, dans la cavité de positionnement. La géométrie même du fond du logement, formant un renfoncement ou un coin dans lequel vient naturellement se loger le galet non soumis à l'effort en rotation exercé par l'outil, au moment du serrage des mors par l'opérateur, assure un excellent positionnement du galet ;
- Il est à noter que cette structure évite la mise en oeuvre d'un élément ressort pour positionner le galet. Les faces latérales permettent de limiter le degré de mobilité latéral des galets afin d'assurer de façon certaine le centrage automatique du galet lors de cette phase ;
- deuxième phase : l'utilisateur termine le serrage du mandrin. Les galets sont en position centrée et l'effort de serrage appliqué par l'utilisateur sur le mandrin génère des efforts de contact entre les galets, le fond du logement du mors et l'outil. Dans cette configuration, les zones d'appui des galets sur l'outil sont parfaitement réparties autour de l'outil (à 120° dans le cas de trois mors), ce qui permet de garantir le faux rond du mandrin (tolérances classiques de battement de l'outil qui est monté dans le mandrin). De plus, les galets se situent alors dans une position idéale « en amont » de chacune des portions d'appui ;
- troisième phase : le mandrin ainsi configuré permet de générer l'effet de coin recherché dès que le couple résistant exercé par l'outil oblige les galets à rouler sur les portions d'appui dans un sens ou dans l'autre (gauche ou droite). Durant cette phase, il est à noter que les galets peuvent n'avoir aucun contact avec les faces latérales du logement. En effet le galet peut se positionner entre une des portions d'appui et la queue de l'outil pour créer l'effet de coin.

En fonctionnement dans le sens de rotation approprié, du fait du couple résistant exercé par l'outil, le galet se déplace vers une paroi latérale, en roulant sans glisser sur l'outil et. sur le mors, ce qui assure une bonne transmission du mouvement de rotation entre le mors - entraîné par la machine tournante - et l'outil. Du fait de la courbure ou de l'inclinaison de la portion d'appui du fond du logement le long de laquelle se déplace le galet, le galet se rapproche de l'axe de la pièce centrale, donc de l'outil, jusqu'à l'obtention de l'effet de coincement (pas nécessairement en butée contre ladite paroi latérale). Grâce à l'invention, on obtient un coincement du galet et un excellent serrage de l'outil en fonctionnement, même si le serrage initial effectué par l'opérateur n'était pas très important. De plus, la symétrie du fond du logement permet de réaliser un excellent serrage de l'outil dans chacun des deux sens de rotation de la tête centrale.

Par conséquent, le mandrin selon l'invention permet de rendre la puissance de serrage du mandrin presque totalement indépendante :

- du couple de serrage Ca appliqué sur l'écrou, donc indépendante du rendement propre du mandrin ;
- et du coefficient de frottement u entre le mors et la queue de l'outil.

Selon une réalisation possible du mandrin, et vu dans un plan transversal, en tout point de la première portion d'appui, l'angle ($\alpha$) formé entre la tangente à la première portion audit point et la tangente au galet passant par le point de contact entre le galet et l'outil lorsque le galet est en butée contre la première face latérale du logement est tel que

$$\tan \alpha/2 < Umin$$

où Umin est la valeur minimale entre :

- les coefficients de frottement u entre le galet et un outil choisi dans un ensemble prédéterminé d'outils susceptibles d'être montés dans le mandrin ;
- et le coefficient de frottement u' entre le galet et le mors.

Ainsi, connaissant d'une part un ensemble d'outils susceptibles d'être montés dans le mandrin, et les valeurs des coefficients de frottement u correspondants, et d'autre part le coefficient de frottement u' entre le galet et le mors, on s'assure que $\tan \alpha/2 < u'$ et $\tan \alpha/2 < u$ pour chacun des outils de l'ensemble considéré. Cette relation garantit un roulement sans glissement du galet sur l'outil et sur le mors lorsque le galet est en butée contre la première face latérale du logement ou, plus généralement, lorsque le galet est en position extrême de coincement (pas forcément en butée contre cette face latérale).

Par exemple, la première portion d'appui est sensiblement plane et parallèle à l'axe de la pièce centrale et, vu dans un plan transversal, l'angle ($\alpha$) formé entre la première portion d'appui et la tangente au galet passant par le point de contact entre le galet et l'outil lorsque le galet est en butée contre la première face latérale du logement est tel que :

$$\tan \alpha/2 < Umin.$$

L'angle ($\alpha$) peut être compris entre 0,5 et 2°, et par exemple de l'ordre de 1 °.

Selon une réalisation avantageuse, les première et deuxième portions d'appui, dans leur zone de jonction, forment sensiblement un angle obtus compris entre 165° et 175°. C'est dans cet angle que le galet viendra se positionner.

Par exemple, le logement est ménagé longitudinalement dans le mors et l'organe de retenue est assemblé audit mors du côté de l'ouverture du logement, pour retenir le galet dans ledit logement tout en lui permettant d'être mobile en rotation et en translation, une lumière étant ménagée dans ledit organe de retenue pour permettre au galet de faire partiellement saillie hors du logement et de venir en contact avec l'outil.

Le galet peut être sensiblement cylindrique et présenter à chacune de ses extrémités une tige axiale apte à coopérer chacune avec une partie de l'organe de retenue bordant la lumière.

On décrit à présent, à titre d'exemples non limitatifs, deux modes de réalisation possibles de l'invention, en référence aux figures annexées :

La figure 1 est une vue en perspective éclatée d'un mandrin selon l'invention ;
La figure 2 est une vue de côté du mandrin de la figure 1, en position montée, et tenant un outil ;
Les figures 3, 4 et 5 sont des vues en perspective respectivement d'un mors, d'un galet et d'un organe de retenue équipant le mandrin de la figure 1 ;
La figure 6 est une vue depuis l'avant du mors de la figure 3 dans lequel sont montés le galet et l'organe de retenue ;
La figure 7 est une vue en coupe du mors selon la ligne AA de la figure 6 ;
La figure 8 est une vue en coupe du mandrin selon la ligne A'A' de la figure 2, avant mise en rotation du mandrin ;
La figure 9 est une vue agrandie du détail B de la figure 8 ;
Les figures 10 et 11 sont des vues similaires aux figures 8 et 9, lors de la rotation à droite du mandrin ;
La figure 12 est une vue similaire à la figure 11, lors de la rotation à gauche du mandrin ;
La figure 13 est une représentation schématique de l'outil, du mors et du galet avec les forces normales et tangentielles s'exerçant sur le galet.

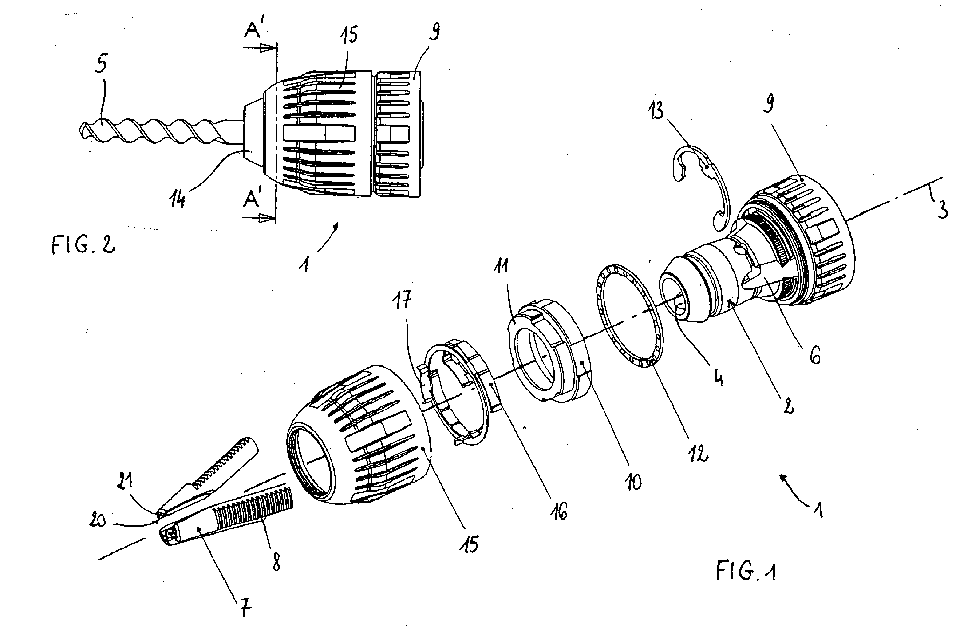

On se rapporte tout d'abord aux figures 1 et 2.

Le mandrin 1 comprend une pièce centrale formant ici un corps 2, de forme générale cylindrique et d'axe 3. La partie arrière du corps 2 comprend un orifice destiné à permettre l'introduction d'une broche d'une machine tournante telle qu'une perceuse. La partie avant du corps 2 comprend un alésage 4 longitudinal dans lequel est destiné à être introduit un outil 5 tel qu'un foret, ainsi que trois logements 6 convergeant vers l'avant, recevant chacun un mors 7 et permettant son guidage en translation. Les mors 7 présentent un filetage extérieur 8.

Le mandrin 1 comprend également une bague arrière 9, sensiblement cylindrique, engagée autour de la partie arrière du corps 2 de façon sensiblement coaxiale, et rendue solidaire de celle-ci par tout moyen approprié.

Un écrou 10 est engagé autour des mors 7, sensiblement coaxialement au corps 2. L'écrou 10 présente un filetage intérieur coopérant avec le filetage extérieur 8 des mors 7, pour permettre le déplacement des mors 7 vers la position de serrage ou desserrée suivant le sens d'entraînement en rotation de l'écrou 10. L'écrou 10 comprend en outre trois dents 11 sensiblement radiales et équiréparties à sa périphérie. L'écrou 10 est monté en butée arrière sur le corps 2. Afin de faciliter sa rotation, une cage à billes 12, maintenue par un circlips 13, est interposée entre l'écrou 10 et le corps 2. De plus, un nez métallique 14 est monté sur le corps 2 en avant de l'écrou 10, permettant ainsi de maintenir axialement l'écrou 10.

Le mandrin 1 comprend également une bague 15 (ou chemise) servant au serrage, sensiblement cylindrique, montée autour de l'écrou 10 sensiblement coaxialement, et bloquée en rotation vers l'arrière par la bague arrière 9 et vers l'avant par le nez métallique 14.

Entre la bague 15 et l'écrou 10 est disposé un ressort 16 muni de trois organes 17 faisant saillie vers l'axe 3, et destinés à être intercalés entre les dents 11 de l'écrou 10, de sorte que la mise en rotation de la bague 15 par un opérateur entraîne la mise en rotation de l'écrou 10, et donc le déplacement des mors 7.

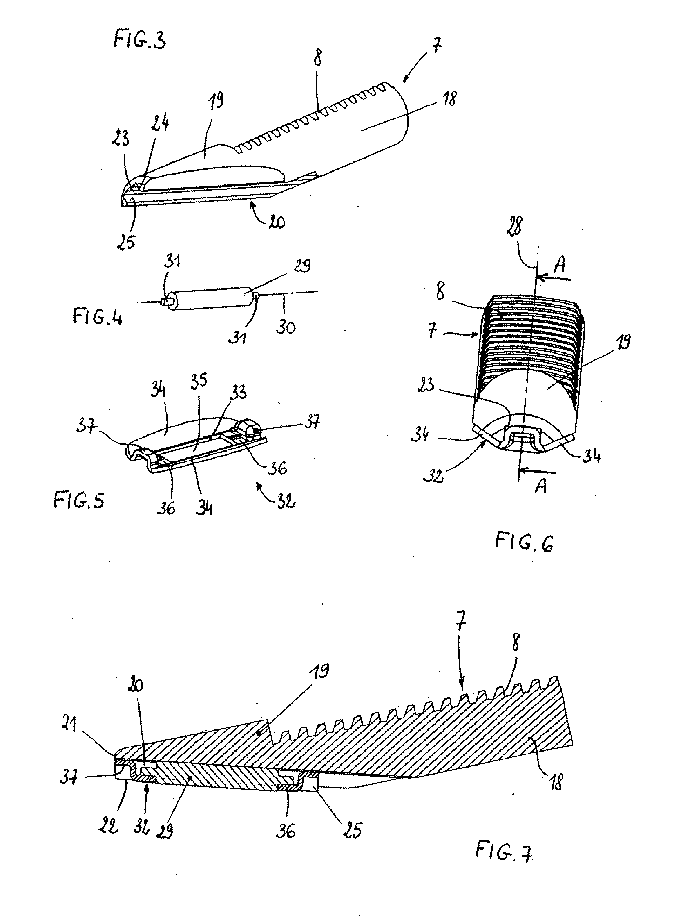

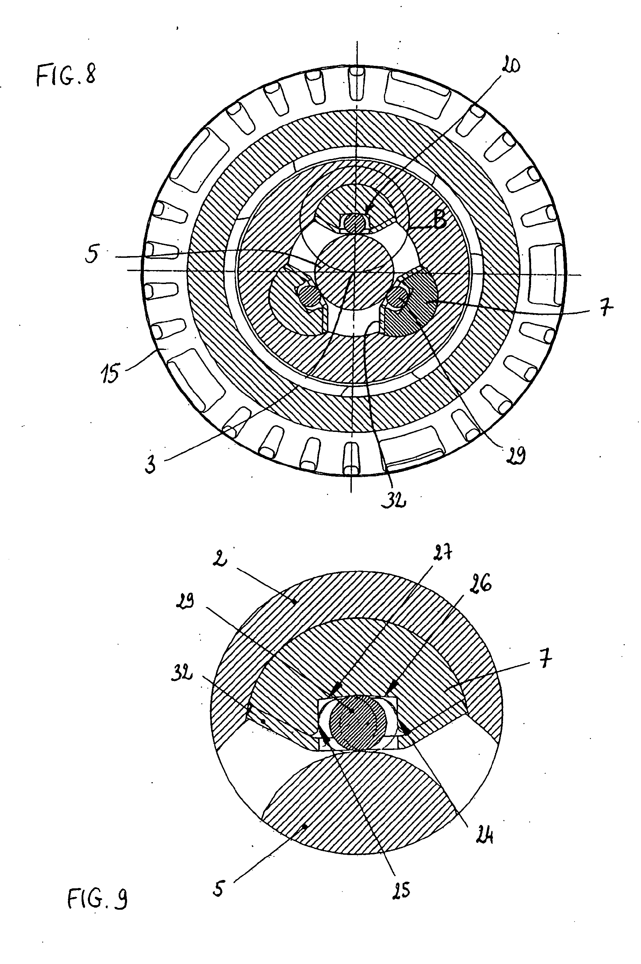

Comme illustré sur les figures 3 et 7, chaque mors 7 comporte une partie arrière 18 inclinée par rapport à l'axe 3, coulissant dans un logement 6 du corps 2, et une partie avant 19 dont la face intérieure, c'est-à-dire la face en regard de l'axe 3, est sensiblement parallèle à l'axe 3 et destinée à venir en contact avec l'outil 5.

Chaque mors 7 comprend un logement 20 ménagé dans sa partie avant 19, du côté intérieur. Le logement 20 s'étend longitudinalement depuis l'extrémité avant 21 du mors 7 jusqu'à l'angle formé entre les parties avant 19 et arrière 18. Le logement 20 comprend une ouverture 22 dirigée vers l'axe 3, un fond 23 opposé à l'ouverture 22, ainsi qu'une première et une deuxième faces latérales 24, 25. Les faces latérales 24, 25 sont sensiblement parallèles à l'axe 3, parallèles entre elles, et globalement orthogonales à la face intérieure de la partie avant 19 du mors 7.

Le fond 23 du logement 20 présente une première portion d'appui 26, adjacente à la première face latérale 24, et une deuxième portion d'appui 27, adjacente à la deuxième face latérale 25 et à la première portion d'appui 26. Les deux portions d'appui 26, 27 sont symétriques par rapport au plan longitudinal médian 28 du mors 7.

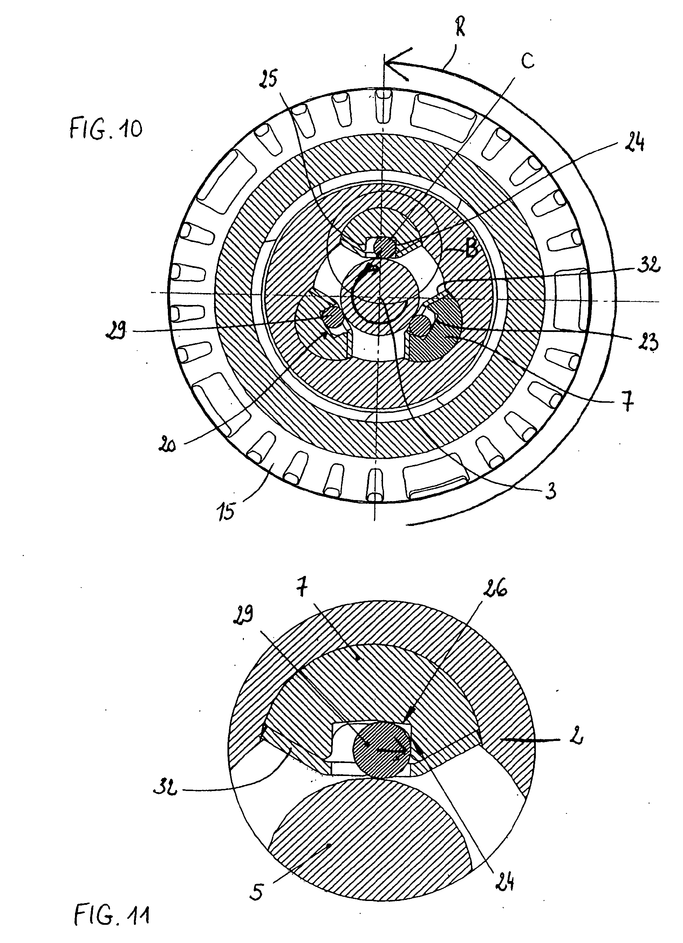

La première portion d'appui 26 présente la forme d'un plan faiblement incliné qui, vu dans un plan transversal à l'axe 3, s'éloigne de l'axe 3 lorsqu'on se déplace de la première face latérale 24 vers la deuxième face latérale 25. De façon similaire, la deuxième portion d'appui 27 présente donc la forme d'un plan faiblement incliné qui, vu dans un plan transversal à l'axe 3, s'éloigne de l'axe 3 lorsqu'on se déplace de la deuxième face latérale 25 vers la première face latérale 24. Le fond 23 du logement 20 présente ainsi la forme d'un V très aplati (voir figure 9).

Un galet 29 (ou rouleau), sensiblement cylindrique, est placé dans le logement 20 de sorte que son axe 30 soit sensiblement parallèle à l'axe 3. Le galet 29 présente à chacune de ses extrémités une tige axiale 31. Le diamètre du galet 29 est légèrement plus important que la profondeur du logement 20 de sorte que, quand le galet 29 est en contact avec le fond 23 du logement 20, même dans l'angle formé entre les portions d'appui 26, 27 du fond 23, le galet 29 saille au-delà de la face inférieure de la partie avant 19 du mors 7.

Un organe de retenue 32 est assemblé au mors 7 du côté de l'ouverture 22 du logement 20 pour retenir le galet dans le logement 20. L'organe de retenue 32 comporte une partie centrale 33 sensiblement rectangulaire, destinée à être placée en regard de l'ouverture 22, et deux ailes 34 latérales fixées à la face inférieure de la partie avant 19 du mors 7. Dans la partie centrale 33 est ménagée une lumière 35 sensiblement rectangulaire, dont la longueur (selon l'axe 3) correspond sensiblement à la longueur du galet 29 et dont la largeur (transversalement) est plus grande que le diamètre du galet 29. A l'avant et à l'arrière de la lumière 35 se trouvent des bordures 36 aptes à soutenir les tiges 31 du galet 29. Enfin, des rebords 37 en saillie sont prévus aux extrémités longitudinales de l'organe de retenue 32 pour fermer le logement 20.

En position montée du galet 29 dans le logement 20 fermé par l'organe de retenue 32, le galet 29 est engagé dans la lumière 35. Ainsi, d'une part, le galet 29 est en contact avec le fond 23 du logement 20 tout en faisant légèrement saillie au-delà du plan inférieur de la partie avant 19 du mors 7. D'autre part, le galet 29 est maintenu sensiblement immobile longitudinalement. En revanche, le galet 29 est mobile en rotation autour de son axe 30, mais également mobile en translation entre les deux faces latérales 24, 25 du logement 20, selon une direction sensiblement orthogonale audites faces latérales 24, 25. Ces mouvements ne sont pas entravés par l'organe de retenue 32.

L'angle d'inclinaison des portions d'appui 26, 27 du fond 23 du logement 20 est défini de la façon suivante : lorsque le galet 29 est en butée contre la première face latérale 24 du logement 20 et qu'un outil 5 est monté dans la mandrin 1 (figure 13), la tangente T au galet 29 passant par le point de contact P entre le galet 29 et l'outil 5 forme avec la première portion d'appui 26 un angle $\alpha$, en vue dans un plan transversal.

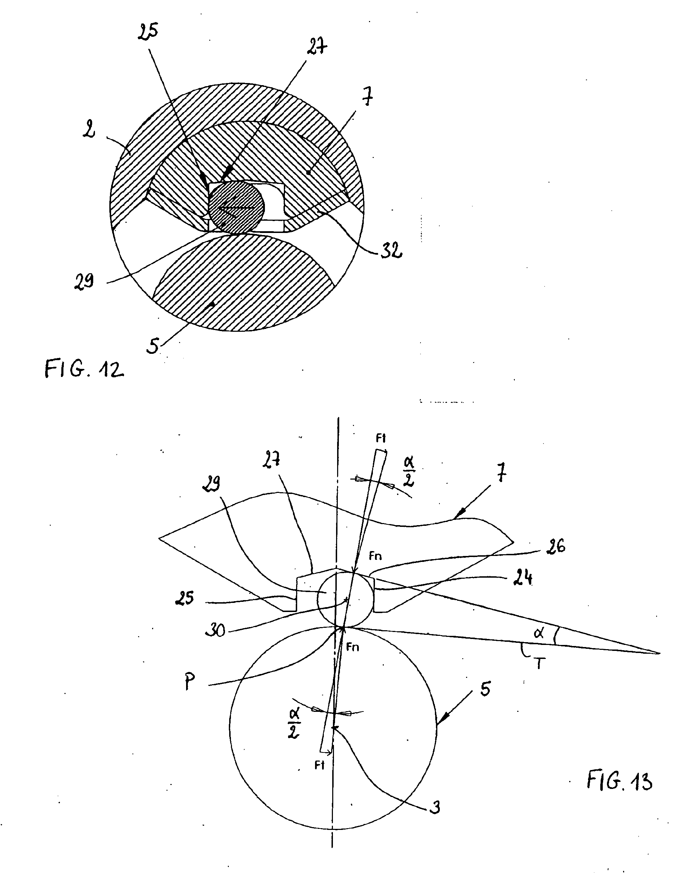

On décrit à présent le fonctionnement du mandrin, en référence aux figures 8 à 12.

Lorsque le mandrin 1 est ouvert, le galet 29 se positionne de façon quelconque dans le logement 20 du mors 7. Au moment de la fermeture du mandrin 1, le galet 29 arrive en contact avec la queue de l'outil 5. Les portions d'appui 26, 27, inclinées l'une vers l'autre en V, obligent alors le galet 29 à trouver, de façon naturelle, sa position centrale dans le logement 20, comme illustré sur les figures 8 et 9. Dans cette position d'équilibre stable, l'effort Fn peut alors être appliqué par le mors 7 sur le galet 29.

Lorsque le mandrin 1 travaille en rotation R à droite (figure 10), le couple appliqué par la machine et le couple résistant C appliqué par l'outil 5 sur le galet 29 entraîne ce dernier à quitter sa position d'équilibre centrale et à se déplacer sur la portion droite du fond 23 - ici la première portion d'appui 26 - en direction de la face latérale droite du logement 20 - ici la première face latérale 24. De ce fait, le galet 29 se rapproche de l'axe 3 et tend donc à resserrer l'outil 5. Il est à noter que l'effet de coincement peut être obtenu même si le galet 29 n'est pas en contact avec cette face latérale du logement 20.

Pour que l'effet de coincement recherché soit effectif, le galet 29 doit rouler sans glisser sur le mors et sur l'outil. Pour cela, il faut, au niveau des points de contact du galet 29 avec le mors 7 et avec l'outil 5, que la relation suivante soit vérifiée : Ft / Fn < u, où :

- u est le coefficient de frottement entre le galet et la pièce considérée (outil 5, mors 7) ;
- Ft est l'effort tangentiel ;
- Fn est l'effort normal.

Or, du fait de la géométrie du mandrin 1, et en particulier des mors 7, l'angle entre Ft et Fn est égal à $\alpha/2$ (voir figure 13). Donc, il suffit que le coefficient de frottement u existant entre le mors 7, le galet 29 et la queue de l'outil 5 soit supérieur à la tangente de l'angle $\alpha/2$ : $u > \tan \alpha/2$. Connaissant les valeurs de u pour différents outils et le mors et le galet, il est très facile de garantir cette relation par un choix approprié de la valeur de $\alpha$.

Un angle $\alpha$ de l'ordre de 1° fournit de bons résultats en termes de coincement et de serrage. De plus, on obtient un fond 23 de logement 20 présentant une forme ni trop plate (dans laquelle le galet ne se positionnerait pas naturellement au centre), ni trop fermée (dans laquelle le galet aurait tendance à rester en position centrale).

Grâce à l'invention, l'effort résultant sur le galet 29 plaque ce dernier entre la première portion d'appui 26 et la queue de l'outil 5. L'effet de coin ainsi obtenu entre le mors, le galet et la queue de l'outil permet d'obtenir le blocage complet de l'outil 5 dans le mandrin 1, et ce indépendamment du rendement propre du mandrin et du coefficient de frottement u.

La rotation de la bague 15, entraînant celle de l'écrou 10, est utilisée seulement pour adapter le diamètre de serrage du mandrin 1 au diamètre de la queue de l'outil 5. L'effort normal Fn que ce système doit générer sur le galet 29 est très faible, en comparaison du système classique. Il assure uniquement que le galet 29 soit bien en contact avec le mors 7 et la queue de l'outil 5 et qu'il puisse rouler sans glisser contre les portions d'appui 26, 27 du fond 23 du logement 20 et la queue de l'outil 5 formant un angle de coin.

L'invention permet ainsi de générer un couple de serrage très important, et, de plus, de ne pas détériorer la queue de l'outil.

Lorsque le mandrin 1 travaille en rotation à gauche (figure 12), le phénomène précédemment décrit se produit de la même façon, symétriquement par rapport au plan longitudinal médian 28 du mors 7. Le galet 29 vient ainsi en butée contre la deuxième face latérale 25 (face latérale gauche), après avoir roulé sans glisser sur la deuxième portion d'appui 27 et sur l'outil 5. L'effet de coincement peut également être obtenu si le galet n'est pas en contact avec la deuxième face latérale 25.

Dans la description qui précède, un seul galet est placé dans chaque logement. Il est toutefois possible de prévoir plusieurs galets dans un même logement.

Il va de soi que l'invention n'est pas limitée aux modes de réalisation décrits ci-dessus à titre d'exemples mais qu'elle en embrasse au contraire toutes les variantes de réalisation.

En particulier, l'invention pourrait s'appliquer à d'autres types de mandrins, notamment :

- un mandrin où les mors sont guidés en translation dans des logements ménagés dans un corps rotatif autour de la pièce centrale et destiné à réaliser le déplacement des mors en vue du serrage ou du desserrage de l'outil, les mors présentant un filetage sur leur face intérieure coopérant avec un filetage prévu sur la partie avant de la pièce centrale ;
- un mandrin où les mors sont sollicités vers l'avant par un organe élastique et où un opérateur déplace les mors vers l'arrière par une action en translation sur un organe approprié, lors de l'introduction de l'outil.

**Revendications**

1. Mandrin porte-outil pour l'équipement d'une machine tournante, comprenant :

 - une pièce centrale (2) présentant un axe (3) et comportant une partie arrière destinée à être fixée sur un arbre moteur de la machine tournante et une partie avant à laquelle sont associés des mors (7) présentant chacun un plan longitudinal médian (28) ;
- des moyens de déplacement des mors (7) entre une position de serrage de l'outil (5) et une position desserrée;

**caractérisé en ce qu'**il comprend :

- un logement (20) ménagé du côté intérieur de chaque mors (7), ledit logement (20) comprenant une ouverture (22) dirigée vers l'axe (3) de la pièce centrale (2), un fond (23) opposé à l'ouverture, ainsi qu'une première et une deuxième faces latérales (24, 25) sensiblement parallèles à l'axe (3) de la pièce centrale (2) ;
- au moins un galet (29) monté dans chaque logement (20) sensiblement contre le fond (23) de celui-ci, au moyen d'un organe de retenue (32) rigide et distinct de l'organe de retenue associé aux autres mors (7), le galet (29) étant mobile en rotation autour de son axe (30) qui est disposé sensiblement parallèlement à l'axe (3) de la pièce centrale (2), et mobile en translation entre les deux faces latérales (24, 25) du logement (20) dont l'écartement est supérieur au diamètre du galet (29), le galet (29) étant apte à coopérer avec le mors (7) et l'outil (5) ;

le fond (23) du logement (20) présentant une première et une deuxième portions d'appui (26, 27) s'étendant depuis la première face latérale (24), respectivement la deuxième face latérale (25), jusqu'au plan longitudinal médian du mors (7), chaque portion d'appui (26, 27) étant courbée ou inclinée transversalement de sorte que la distance entre l'axe (3) de la pièce centrale (2) et ladite portion d'appui (26, 27) augmente lorsqu'on se rapproche du plan longitudinal médian, lesdites portions d'appui (26, 27) étant adjacentes et symétriques par rapport au plan longitudinal médian et formant dans leur zone de jonction une cavité de positionnement du galet (29), prévue pour que, lors de la mise en place de l'outil entre les mors, le galet (29) se positionne au contact du fond (23) du logement (20), sensiblement dans la cavité de positionnement.

2. Mandrin selon la revendication 1, **caractérisé en ce que**, vu dans un plan transversal, en tout point de la première portion d'appui (26), l'angle ($\alpha$) formé entre la tangente à la première portion d'appui (26) audit point et la tangente (T) au galet (29) passant par le point de contact (P) entre le galet (29) et l'outil (5) lorsque le galet est en butée contre la première face latérale (24) du logement (20) est tel que : tan $\alpha$/2 < Umin
où Umin est la valeur minimale entre :

- les coefficients de frottement u entre le galet (29) et un outil (5) choisi dans un ensemble prédéterminé d'outils susceptibles d'être montés dans le mandrin (1) ;
- et le coefficient de frottement u' entre le galet (29) et le mors (7).

3. Mandrin selon la revendication 1 ou 2, **caractérisé en ce que** la première portion d'appui (26) est sensiblement plane et parallèle à l'axe (3) de la pièce centrale (2) et **en ce que**, vu dans un plan transversal, l'angle ($\alpha$) formé entre la première portion d'appui (26) et la tangente (T) au galet (29) passant par le point de contact (P) entre le galet (29) et l'outil (5) lorsque le galet est en butée contre la première face latérale (24) du logement (20) est tel que : tan $\alpha$/2 < Umin
où Umin est la valeur minimale entre :

- les coefficients de frottement u entre le galet (29) et un outil (5) choisi dans un ensemble prédéterminé d'outils susceptibles d'être montés dans le mandrin (1) ;
- et le coefficient de frottement u' entre le galet (29) et le mors (7).

4. Mandrin selon la revendication 2 ou 3, **caractérisé en ce que** l'angle ($\alpha$) est compris entre 0,5 et 2°.

5. Mandrin selon l'une des revendications 1 à 4, **caractérisé en ce que** les première et deuxième portions d'appui (26, 27), dans leur zone de jonction, forment sensiblement un angle obtus compris entre 165° et 175°.

6. Mandrin selon l'une des revendications 1 à 5, **caractérisé en ce que** le logement (20) est ménagé longitudinalement dans le mors (7) et **en ce que** l'organe de retenue (32) est assemblé audit mors du côté de l'ouverture du logement (20), pour retenir le galet (29) dans ledit logement tout en lui permettant d'être mobile en rotation et en translation, une lumière (35) étant ménagée dans ledit organe de retenue (32) pour permettre au galet (29) de faire partiellement saillie hors du logement (20) et de venir en contact avec l'outil (5).

7. Mandrin selon la revendication 6, **caractérisé en ce que** le galet (29) est sensiblement cylindrique et présente à chacune de ses extrémités une tige axiale (31) apte à coopérer chacune avec une partie (36) de l'organe de retenue (32) bordant la lumière (35).

8. Mandrin selon l'une des revendications 1 à 7, **caractérisé en ce que** les mors (7) sont guidés en translation dans des logements (6) ménagés dans la pièce centrale formant corps (2), lesdits mors (7) convergeant vers l'avant et présentant un filetage (8) sur leur face extérieure, et **en ce que** le mandrin (1) comprend un écrou (10) placé autour de la pièce centrale (2) et présentant un filetage intérieur coopérant avec le filetage (8) des mors (7) afin de permettre le déplacement des mors (7) en vue du serrage ou du desserrage de l'outil (5).

9. Mandrin selon l'une des revendications 1 à 7, **caractérisé en ce que** les mors (8) sont guidés en translation dans des logements ménagés dans un corps monté rotatif autour de la pièce centrale et destiné à réaliser le déplacement des mors en vue du serrage ou du desserrage de l'outil, les mors présentant un filetage sur leur face intérieure coopérant avec un filetage prévu sur la partie avant de la pièce centrale.

FIG. 2

FIG. 1

EP 1 815 926 A2

FIG.3

FIG.4

FIG.5

FIG.6

FIG.7

FIG. 8

FIG. 9

FIG. 10

FIG. 11

FIG. 12

FIG. 13

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• WO 0181046 A